# EUROPEAN PATENT APPLICATION

(11) **EP 1 917 858 A1**
(43) Date of publication of application: **07.05.2008**
(21) Application number: 06020551.5
(22) Date of filing: 29.09.2006
(51) Int. Cl.: A01N 51/00, A01N 47/40, A01N 43/40, A01P 21/00

(54) **A method for enhancing plant tolerance**

(71) Applicant: Syngenta Participations AG, 4058 Basel (CH)
(72) Inventor: The designation of the inventor has not yet been filed

(57) **Abstract**

A method of increasing functional protein activity in a plant comprising applying to the plant, part of the plant, the plant propagation material thereof and/or a surrounding area thereof an effective amount of one or more neonicotinoid compounds.

## Description

The present invention relates to methods of enhancing plant tolerance to environmental stress conditions, particularly by enhancing the activity of one or more functional proteins within the plant.

Neonicotinoids, especially thiamethoxam, is reported to demonstrate a positive effect on plant health, and growers and researchers notice healthier and more vigorous plants and higher yields even in situations where there is no insect presence, see for example, WO01/26468.

The effect is witnessed in a variety of crops resulting in
- Faster Emergence
- Higher Yield
- Improved Protein content
- More developed roots
- Tillering increase
- Taller, greener plants
- Increased Leaf area
- Early maturity, & flowering

It has now been discovered that neonicotinoids, in particular thiamethoxam, can enhance plant tolerance to environmental stress by increasing functional protein activity in the plant This action is independent of the presence of pest attack or pest pressure on the plant.

Accordingly in a first aspect, the present invention provides a method of increasing functional protein activity in a plant comprising applying to the plant, part of the plant, the plant propagation material thereof and/or a surrounding area thereof an effective amount of one or more neonicotinoid compounds.

In another aspect, the invention provides the use of an effective amount of one or more neonicotinoid compounds on a plant, part of a plant, a plant propagation material and/or a surrounding area thereof for increasing functional protein activity in the plant

In a preferred embodiment, the functional protein activity increased is that relating to detoxification systems.

in another embodiment, the functional protein is a multifunctional protein.

In an embodiment, the functional protein is one or more selected from Glutathione-S-transferase (GST), glutathione peroxidase, glucosyl transferases, glucosyl esterases, and a cytochrome P450.

In an embodiment, the functional protein is GST.

In an embodiment, the functional protein is glutathione peroxidise (GPOX).

In an embodiment, the functional protein is a cytochrome P450.

The involvement of GSTs in herbicide metabolism and herbicide selectivity in numerous plant species has been studied in detail. GSTs are multifunctional enzymes and in addition to their ability to catalyse the conjugation of herbicides with glutathione to form non-toxic derivatives - some GSTs also exhibit glutathione peroxidise activity. Accordingly, GSTs have been implicated in providing stress tolerance in plants - and more recent studies have indicated that GSTs may play a role in plant growth and development.

in an embodiment, independent of other embodiments, the neonicotinoid compound is selected from acetamiprid, clothianidin, dinotefuran, imidacloprid, nitenpyram, thiacloprid and thiamethoxam. In an embodiment, thiamethoxam is preferred.

Thus, the methods of the present invention, allow the plant to better cope under stress or tough growing conditions. Particular examples of such conditions are drought, low pH, high soil salinity, heat stress leading to protein degradation, toxic levels of aluminium, virus attack and wounding from various causes such as pests, wind, hail.

Accordingly, in an aspect, the present invention also provides a method of enhancing plant tolerance to various stresses, for example one or more of drought, low pH, high soil salinity, heat stress leading to protein degradation, toxic levels of aluminium, virus attack and wounding from pests, wind, hail, the method comprising applying an effective amount of one or more neonicotinoid compounds to the plant, part of a plant, a plant propagation material and/or a surrounding area thereof.

The term "increasing functional protein activity", in the context of the present invention, means that the functional protein activity is elevated or increased in a treated plant (i.e when an effective amount of one or more neonicotinoid compounds are applied to the plant, part of the plant, the plant propagation material thereof and/or a surrounding area thereof) compared with an untreated plant. For the avoidance of doubt it is understood that the functional protein activity in untreated plants may be zero, or at least below the limits of detection. The increase in activity is typically caused by increased endogenous levels of the functional protein which may result, for example, from increased gene expression.

In each aspect, an embodiment involves applying the neonicotinoid compound to a plant propagation material.

In each aspect, an embodiment involves applying the neonicotinoid on a plant, part of a plant, and/or a surrounding area thereof.

In an embodiment of each aspect, independent of other embodiments, the plant is a crop plant, preferably selected from cereals (wheat, barley, rye, oats, corn, rice, sorghum, triticale and related crops); beet (sugar beet and fodder beet); leguminous plants (beans, lentils, peas, soybeans); oil plants (rape, mustard, sunflowers); cucumber plants (marrows, cucumbers, melons); fibre plants (cotton, flax, hemp, jute); vegetables (spinach, lettuce, asparagus, cabbages, carrots, onions, tomatoes, potatoes, paprika); as well as ornamentals (flowers, shrubs, broad-leaved trees and evergreens, such as conifers). Especially suitable are soya, corn, wheat, barley, rye, oats, corn, rice, sorghum, triticale, canola, oil seed rape, cotton, dry beans, and sunflowers.

Suitable target crops also include transgenic crop plants of the foregoing types. The transgenic crop plants used according to the invention are plants, or propagation material thereof, which are transformed by means of recombinant DNA technology in such a way that they are - for instance - capable of synthesizing selectively acting toxins as are known, for example, from toxin-producing invertebrates, especially of the phylum Arthropoda, as can be obtained from Bacillus thuringiensis strains; or as are known from plants, such as lectins; or in the alternative capable of expressing a herbicidal or fungicidal resistance. Examples of such toxins, or transgenic plants which are capable of synthesizing such toxins, have been disclosed, for example, in EP-A-0 374 753, WO 93/07278, WO 95/34656, EP-A-0 427 529 and EP-A-451 878 and are incorporated by reference in the present application.

ln an embodiment, the neonicotinoid compound is applied to the plant propagation material.

In an embodiment, the neonicotinoid compound is applied to the surrounding area of the locus of the plant (i.e. cultivation area), independently of application/treatment of the propagation material, before, after or during the planting of the propagation material. In the case of perennial crop plants, the neonicotinoid compound is preferably applied before beginning of each vegetative stage of the plant or at the beginning of the rain season. In the case of annual crops plants, the neonicotinoid compound is preferably applied during the youth development stage, e.g. stages of germination and/or seedling growth. In the case of transplant plants, the neonicotinoid compound is preferably applied at the time of transplant and/or to the seedling tray.

In an embodiment, the compound is applied more than once during the growth stage of the plant.

The neonicotinoid compound and pesticidal compositions thereof can be formulated for a particular use. Preferably, the neonicotinoid compound and compositions thereof can be formulated for protecting plant propagation materials. Advantageously, the neonicotinoid compound and compositions thereof are formulated for plant propagation material, preferably seed, treatment applications for controlling or preventing damage by pests, which are found in agriculture and forestry, and can particularly damage the plant in the early stages of its development.

Further, the present invention also envisages soil application of the neonicotinoid compound or a pesticidal composition. Methods of applying to the soil can be via any suitable method, which ensures that the neonicotinoid compound penetrates the soil, for example, nursery tray application, in furrow application, soil drenching, soil injection, drip irrigation, application through sprinklers or central pivot, incorporation into soil (broad cast or in band) are such methods. The application to the locus can be before planting or sowing, during planting or sowing, after planting or sowing, or any combination thereof.

The invention also envisages application of the neonicotinoid compound on or to plant. The neonicotinoid compound is directly contacted with the plant, the compound may be contacted with the entire plant or with only a portion of the plant, such as the leaf or stem or seedling. In a preferred aspect, the plant is contacted with a neonicotinoid compound by overhead spraying of the composition. Application of neonicotinoid compound to foliage of plants is preferably accomplished by spraying, using any conventional means for spraying liquids, such as spray nozzles or spinning-disk atomizers. The neonicotinoid compound, generally in the form of a formulation, is preferably dilute enough to be readily sprayed using standard agricultural spray equipment.

The benefit from the invention can particularly be achieved either by (i) treating plant propagation material with the neonicotinoid compound or a pesticidal composition thereof or (ii) applying to the locus where Control is desired, generally the planting site, the neonicotinoid compound or a pesticidal composition thereof, or both (i) and (ii).

The term "plant propagation material" is understood to denote all the generative parts of the plant, such as seeds, which can be used for the multiplication of the latter and vegetative plant materials such as cuttings and tubers (for example, potatoes). Accordingly, as used herein, part of a plant includes propagation material. There may be mentioned, e.g., the seeds (in the strict sense), roots, fruits, tubers, bulbs, rhizomes, parts of plants. Germinated plants and young plants, which are to be transplanted after germination or after emergence from the soil, may also be mentioned. These young plants may be protected before transplantation by a total or partial treatment by immersion.

Parts of plant are any sections of a plant that develop from a plant propagation material, such as a seed. Parts of plant and plants can also benefit from the pathogenic and/or pest damage protection achieved by the application of the composition comprising a neonicotinoid compound on to the plant propagation material. In an embodiment, certain parts of a plant can also be considered as plant propagation material, which can themselves be applied (or treated) with the composition; and consequently, the plant, and further parts of the plant that develop from the treated parts of plant can also benefit from the pathogenic and/or pest damage protection achieved by the application of the composition on to the certain parts of plant. In an embodiment, the seedling of a plant is treated with one or more neonicotinoid compound.

Methods for applying or treating pesticidal active ingredients and mixtures thereof on to plant propagation material, especially seeds, are known in the art, and include dressing, coating, pelleting and soaking application methods of the propagation material. In a preferred embodiment, the combination is applied or treated on to the plant propagation material by a method such that the germination is not induced; generally seed soaking induces germination because the moisture content of the resulting seed is too high. Accordingly, examples of suitable methods for applying (or treating) a plant propagation material, such as a seed, is seed dressing, seed coating or seed pelleting and alike.

It is preferred that the plant propagation material is a seed. Although it is believed that the present method can be applied to a seed in any physiological state, it is preferred that the seed be in a sufficiently durable state that it incurs no damage during the treatment process. Typically, the seed would be a seed that had been harvested from the field; removed from the plant; and separated from any cob, stalk, outer husk, and surrounding pulp or other non-seed plant material. The seed would preferably also be biologically stable to the extent that the treatment would cause no biological damage to the seed. It is believed that the treatment can be applied to the seed at any time between harvest of the seed and sowing of the seed or during the sowing process (seed directed applications). The seed may also be primed either before or after the treatment.

Even distribution of the active ingredients and adherence thereof to the seeds is desired during propagation material treatment. Treatment could vary from a thin film (dressing) of the formulation containing the active ingredient(s) on a plant propagation material, such as a seed, where the original size and/or shape are recognizable to an intermediary state (such as a coating) and then to a thicker film (such as pelleting with many layers of different materials (such as carriers, for example, clays; different formulations, such as of other active ingredients; polymers; and colourants) where the original shape and/or size of the seed is no longer recognisable.

The seed treatment occurs to an unsown seed, and the term "unsown seed" is meant to include seed at any period between the harvest of the seed and the sowing of the seed in the ground for the purpose of germination and growth of the plant.

Treatment to an unsown seed is not meant to include those practices in which the active ingredient is applied to the soil but would include any application practice that would target the seed during the planting process.

Preferably, the treatment occurs before sowing of the seed so that the sown seed has been pre-treated with the combination. In particular, seed coating or seed pelleting are preferred in the treatment of the combinations according to the invention. As a result of the treatment, the active ingredients in each combination are adhered on to the seed and therefore available for pathogenic and/or pest control.

The treated seeds can be stored, handled, sowed and tilled in the same manner as any other active ingredient treated seed.

Rates of application (use) of a neonicotinoid compound vary, for example, according to type of use, type of crop, type of neonicotinoid, whether neonicotinoid used alone or in combination with another pesticide, type of plant propagation material (if appropriate), but is such that the active ingredients is an effective amount to provide the desired enhanced action.

Generally for foliar or soil treatments, application rates can vary from 10g, preferably 50g, to 500g per hectare (g/ha) of a neonicotinoid compound.

Generally for seed treatments, application rates can vary from 5 to 600g /100kg of seeds of a neonicotinoid compound.

Although the main purpose of a neonicotinoid compound is insect control, it has been found that lower rates of a neonicotinoid compound, compared to those for insect control, can be used to enhance the activity of the functional proteins in absence of, or low, pest pressure.

The plant, part of plant, plant propagation material and/or surrounding area thereof may be applied or treated together and/or sequentially with further active compounds. These further compounds can be other pesticidal active ingredients, fertilizers or micronutrient donors or other preparations that influence plant growth, such as inoculants, plant inducers (e.g. nod factors).

In an embodiment, a soybean plant propagation material can be treated with inoculants, such as Rhizobium spp, and/or plant inducers, e.g. a nod factor derived from Bradyrhizobium japonicum, Sinorhizobium fredii, Sinorhizobium meliloti, Bradyrhizobium sp. (Arachis), or Rhizobium leguminosarum biovar phaseoli, viceae, or trifolii.

The one or more pesticides selected from additional insecticides, fungicides and nematicides can be applied on the propagation material, part of a plant, plant and/or surrounding area thereof, in combination with the neonicotinoid, either in any desired sequence or simultaneously.

In the event there are more than two pesticides in combination with the neonicotinoid, the two or more pesticides can be applied in any desired sequence or simultaneously in combination with the neonicotinoid. Preferably, the neonicotinoid and pesticides are applied simultaneously.

A single pesticidal active ingredient may have activity in more than one area of pest control, for example, a pesticide may have fungicide, insecticide and nematicide activity. Specifically, aldicarb is known for insecticide, acaricide and nematicide activity, while metam is known for insecticide, herbicide, fungicide and nematicide activity, and thiabendazole and captan can provide nematicide and fungicide activity.

Examples of pesticides include fungicides, bactericides, insecticides, acaricides and nematicides, for example, triazole derivatives, strobilurins, carbamate (including thiocarbamate), benzimidazoles (thiabendazole), N-trihalomethylthio compounds (captan), substituted benzenes, carboxamides, phenylamides and phenylpyrroles, and mixtures thereof; and neonicotinoids, avermectin and derivatives thereof, carbamates and pyrethroids.

The neonicotinoid can also comprise one or more further co-pesticides. Specific examples are abamectin (1), acephate (2), acetamiprid (4), alpha-cypermethrin (202), azinphos-methyl (45), bifenthrin (76), carbaryl (115), carboxin (120), carbofuran (118), carbosulfan (119), chlorpyrifos (145), cyromazine (209), deltamethrin (223), dimethoate (262), emamectin benzoate (291), endosulfan (294), fipronil (354), furathiocarb (412), gamma-HCH (430), lsofenphos, methiocarb (530), omethoate (594), tefluthrin (769), thiodicarb (799), azoxystrobin (47), pyraclostrobin (690), benomyl (62), bitertanol (84), captan (114), carbendazim (116), carboxin (120), chlorothalonil (142), copper salts (such as copper sulfate (172), cuprous oxide (181), Bordeaux mixture (87), copper hydroxide (169), copper sulfate (tribasic) (173), copper oxychloride (171) and copper octanoate (170)), cymoxanil (200), cyproconazole (207), cyprodinil (208), difenoconazole (247), diniconazole (267), ethirimol, famoxadone (322), tenamidone (325), fenhexamid (334), fenpiclonil (341), fluazinam (363), fludioxonil (368), fluquinconazole (385), flutolanil (396), flutriafol (397), tosetyl-aluminium (407), fuberidazole (409), guazatine (422), hexaconazole (435), hymexazol (447), imazalil (449), iprodione (470), isofenphos, mancozeb (496), maneb (497), metalaxyl (516), metalaxyl-M (517), metconazole (525), myclobutanil (564), silthiofam (729), nuarimol (587), oxadixyl (601), oxine-copper (605), oxolinic acid (606), pencycuron (620), prochloraz (659), procymidone (660), pyrimethanil (705), pyroquilon (710), quintozene (716), tebuconazole (761), tetraconazole (778), thiabendazole (790), thiophanate-methyl (802), thiram (804), triadimenol (815), triazoxide (821), triticonazole (842), trifloxystrobin (832), picoxystrobin (647), ipconazole (468), and 3-Difluoromethyl-1-methyl-1 Hpyrazole-4-carboxylic acid (2-bicyclopropyl-2-yl-phenyl)-amide.

A preferred pesticide for use in combination with a neonicotinoid, such as thiamethoxam, is one or more of tefluthrin, abamectin, azoxystrobin, thiabendazole, fludioxonil, defenconazole, acibenzolar-S-methyl, pyroquilon, cyproconazole, lufenuron, cartap, mefenoxam, thiram, lamda-cyhalothrin, cypermethrin, probenazole, metalaxyl, imidacloprid, carboxin, β-cyftuthrin, and fipronil.

Specific examples of combinations with thiamethoxam include
- Fludioxonil
- Fludioxonil and mefenoxam
- Azoxystrobin and thiabendazole
- Mefenoxam and difenconazole
- Difenconazole
- Difenconazole, teflutrin and fludioxonil
- Difenconazole and fludioxonil
- Difenconazole, mefenoxam and fludioxonil
- Difenconazole and mefenoxam
- Cyproconazole
- Mefenoxam
- Cypermethrin
- Thiram
- Pyroquilon
- Cartap
- Abamectin, fludioxonil, mefenoxam and azoxystrobin

Specific examples of combinations with imidacloprid include
- clothianidin + beta cyfluthrin
- thiodicarb
- tebuconazole
- tefluthrin
- metalaxyl and tebuconazole
- mancozeb
- mancozeb and metalaxyl
- trifloxystrobin
- trifloxystrobin and metalaxyl
- clothianidin and thiodicarb
- metaldehyde

Specific examples of combinations with clothianidin include
- tetramethylthiuram disulfide, carboxim and metalaxyl
- trifloxystrobin
- trifloxystrobin and metalaxyl
- thiodicarb
- methiocarb
- thiram, metalaxyl and carboxin
- beta-cyfluthrin

Particularly preferred combinations are difenoconazole, fludioxonil, metalaxyl-M and thiamethoxam; imidacloprid, tebuconazole and triazoxide; anthraquinone, bitertanol and imidacloprid; azoxystrobin, fludioxonil, metalaxyl-M and thiamethoxam; fludioxonil, mefenoxam and thiamethoxam; bitertanol, fuberidazole and imidacloprid; defenoconazole, metalaxyl-M and thiamethoxam; imidacloprid and pencycuron; carboxin, clothianidin, metalaxyl and thiram; clothianidin and prothioconazole; clothianidin, fluoxastrobin and prothioconazole; prothioconazole, tebuconazole, triazoxide and clothianidin; imidacloprid and triticonazole; defenoconazole, fludioxonil and thiamethoxam; imidacloprid and tebuconazole; cyprodinil, fludioxonil, flutriafol and thiamethoxam; and difenoconazole, fludioxonil, tefluthrin and thiamethoxam.

It has been found that a combination of (a) clothiainidin and prothioconazole, (b) clothiainidin, fluoxastrobin and prothioconazole, (c) clothiainidin, tebuconazole, triazoxide and prothioconazole, (d) imdiacloprid and prothioconazole, (e) thiamethoxam, tebuconazole and fludioxonil, (f) imidacloprid and carboxin, (g) thiamethoxam, tefluthrin, azoxystrobin and tebuconazole, or (h) imidacloprid and tebuconazole, demonstrates particularly good activity.

A preferred ratio by mass between any two pesticides is from 1:10 to 10:1, preferably from 1:5 to 5:1, more preferably from 1:2.5 to 2.5:1, especially from 1:1.5 to 1.5:1.

The neonicotinoid compound may be used either in pure form, i.e., as a solid active ingredient, for example, in a specific particle size, or preferably together with at least one of the auxiliary (also known as adjuvants) customary in formulation technology, such as extenders, e.g., solvents or solid carriers, or surface-active compounds (surfactants), in the form of a formulation, in the present invention. Generally, the neonicotinoid compound is in the form of a formulation composition with one or more of customary formulation auxiliaries.

Therefore, in the instance neonicotinoid compound is applied in combination with one or more further active compounds, such as other pesticides, the active ingredients making-up the combination can be applied, for example, to the locus (e.g., at the planting site, on the plant propagation material,) either simultaneously or in succession at short interval, for example on the same day, if desired together with further carriers, surfactants or other applicatian-promoting adjuvants customarily employed in formulation technology. In a preferred embodiment, the combination is applied simultaneously.

In the event combination is applied simultaneously, they may be applied as a composition, in which case the neonicotinoid compound and, for example, the pesticide(s) can be obtained from a separate formulation source and mixed together (known as a tank-mix, ready-to-apply, spray broth, or slurry), optionally with other active compounds (such as micronutrients, inoculants), or they can be obtained as single formulation mixture source (known as a pre-mix, concentrate, formulated compound (or product)), and optionally mixed together with other active compounds (such as micronutrients, inoculants).

In an embodiment, the neonicotinoid compound and one or other pesticides, if present, are applied as a composition.

In a preferred embodiment of the invention, the composition is a pre-mix composition (or mixture).

Examples of foliar or soil formulation types for pre-mix compositions are:
GR: Granules
WP: wettable powders
WG: water dispersable granules (powders)
SG: water soluble granules
SL: soluble concentrates
EC: emulsifiable concentrate
EW: emulsions, oil in water
ME: micro-emulsion
SC: aqueous suspension concentrate
CS: aqueous capsule suspension
OD: oil-based suspension concentrate, and
SE: aqueous suspo-emulsion.

Whereas, examples of seed treatment formulation types for pre-mix compositions are:
WS: wettable powders for seed treatment slurry
LS: solution for seed treatment
ES: emulsions for seed treatment
FS: suspension concentrate for seed treatment
WG: water dispersible granules, and
CS: aqueous capsule suspension.

Examples of formulation types suitable for tank-mix compositions are solutions, dilute emulsions, suspensions, or a mixture thereof, and dusts.

As with the nature of the formulations, the methods of application, such as foliar, drench, spraying, atomizing, dusting, scattering, coating or pouring, are chosen in accordance with the intended objectives and the prevailing circumstances.

The tank-mix compositions are generally prepared by diluting with a solvent (for example, water) the one or more pre-mix compositions containing different pesticides, and optionally further auxiliaries.

Suitable carriers and adjuvants can be solid or liquid and are the substances ordinarily employed in formulation technology, e.g. natural or regenerated mineral substances, solvents, dispersants, wetting agents, tackifiers, thickeners, binders or fertilizers.

The formulations are prepared in known manner, e.g., by homogeneously mixing and/or grinding the active ingredients with extenders, e.g., solvents, solid carriers and, where appropriate, surface-active compounds (surfactants).

Suitable solvents are: aromatic hydrocarbons, preferably the fractions containing 8 to 12 carbon atoms, e.g. xylene mixtures or substituted naphthalenes, phthalates, such as dibutyl phthalate or dioctyl phthalate, aliphatic hydrocarbons, such as cyclohexane or paraffins, alcohols and glycols and their ethers and esters, such as ethanol, ethylene glycol, ethylene glycol monomethyl or monoethyl ether, ketones, such as cyclohexanone, strongly polar solvents, such as N-methyl-2-pyrrolidone, dimethyl sulfoxide or dimethylformamide, as well as vegetable oils or epoxidised vegetable oils, such as epoxidised coconut oil or soybean oil; or water.

The solid carriers used, e.g., for dusts and dispersible powders, are normally natural mineral fillers, such as calcite, talcum, kaolin, montmorillonite or attapulgite. In order to improve the physical properties it is also possible to add highly dispersed silicic acid or highly dispersed absorbent polymers. Suitable granulated adsorptive carriers are porous types, for example pumice, broken brick, sepiolite or bentonite, and suitable nonsorbent carriers are, for example, calcite or sand. In addition, a great number of pregranulated materials of inorganic or organic nature can be used, e.g., especially dolomite or pulverized plant residues.

Depending upon the nature of the active ingredient compounds to be formulated, suitable surface-active compounds are non-ionic, cationic and/or anionic surfactants having good emulsifying, dispersing and wetting properties. The term "surfactants" will also be understood as comprising mixtures of surfactants.

Particularly advantageous application-promoting adjuvants are also natural or synthetic phospholipids of the cephalin and lecithin series, e.g., phosphatidylethanolamine, phosphatidylserine, phosphatidylglycerol and lysolecithin.

Generally, a tank-mix formulation for foliar or soil application comprises 0.1 to 20%, especially 0.1 to 15 %, active ingredient compounds, and 99.9 to 80 %, especially 99.9 to 85 %, of a solid or liquid auxiliaries (including, for example, a solvent such as water), where the auxiliaries can be a surfactant in an amount of 0 to 20 %, especially 0.1 to 15 %, based on the tank-mix formulation.

Typically, a pre-mix formulation for foliar application comprises 0.1 to 99.9 %, especially 1 to 95 %, active ingredient compounds, and 99.9 to 0.1 %, especially 99 to 5 %, of a solid or liquid adjuvant (including, for example, a solvent such as water), where the auxiliaries can be a surfactant in an amount of 0 to 50 %, especially 0.5 to 40 %, based on the pre-mix formulation.

Normally, a tank-mix formulation for seed treatment application comprises 0.25 to 80%, especially 1 to 75 %, active ingredient compounds, and 99.75 to 20 %, especially 99 to 25 %, of a solid or liquid auxiliaries (including, for example, a solvent such as water), where the auxiliaries can be a surfactant in an amount of 0 to 40 %, especially 0.5 to 30 %, based on the tank-mix formulation.

Typically, a pre-mix formulation for seed treatment application comprises 0.5 to 99.9 %, especially 1 to 95 %, active ingredient compounds, and 99.5 to 0.1 %, especially 99 to 5 %, of a solid or liquid adjuvant (including, for example, a solvent such as water), where the auxiliaries can be a surfactant in an amount of 0 to 50 %, especially 0.5 to 40 %, based on the pre-mix formulation.

Whereas commercial products will preferably be formulated as concentrates (e.g., pre-mix composition (formulation)), the end user will normally employ dilute formulations (e.g., tank mix composition).

Preferred seed treatment pre-mix formulations are aqueous suspension concentrates. The formulation can be applied to the seeds using conventional treating techniques and machines, such as fluidized bed techniques, the roller mill method, rotostatic seed treaters, and drum coaters. Other methods, such as spouted beds may also be useful. The seeds may be presized before coating. After coating, the seeds are typically dried and then transferred to a sizing machine for sizing. Such procedures are known in the art.

In general, the pre-mix compositions of the invention contain 0.5 to 99.9 especially 1 to 95, advantageously 1 to 50, %, by mass of active ingredient compounds, and 99.5 to 0.1, especially 99 to 5, %, by mass of a solid or liquid adjuvant (including, for example, a solvent such as water), where the auxiliaries (or adjuvant) can be a surfactant in an amount of 0 to 50, especially 0.5 to 40, %, by mass based on the mass of the pre-mix formulation.

A preferred embodiment is a plant propagation material treating (or protecting) composition, wherein said plant propagation material protecting composition comprises additionally a colouring agent. The plant propagation material protecting composition or mixture may also comprise at least one polymer from water-soluble and water-dispersible film-forming polymers that improve the adherence of the active ingredients to the treated plant propagation material, which polymer generally has an average molecular weight of at least 10,000 to about 100,000.

The Examples which follow serve to illustrate formulations according to the invention, "active ingredient" denoting indoxacarb or a combination thereof with another pesticide(s).

### Formulation Examples

| Wettable powders | a) | b) | c) |
|---|---|---|---|
| active ingredient | 25% | 50 % | 75% |
| sodium lignosulfonate | 5 % | 5 % | - |
| sodium lauryl sulfate | 3% | - | 5 % |
| sodium diisobutylnaphthalenesulfonate | - | 6 % | 10 % |
| phenol polyethylene glycol ether | - | 2% | - |
| (7-8 mol of ethylene oxide) | | | |
| highly dispersed silicic acid | 5% | 10 % | 10 % |
| Kaolin | 62 % | 27% | - |

The active ingredient is thoroughly mixed with the adjuvants and the mixture is thoroughly ground in a suitable mill, affording wettable powders that can be diluted with water to give suspensions of the desired concentration.

| Powders for dry seed treatment | a) | b) | c) |
|---|---|---|---|
| active ingredient | 25% | 50 % | 75% |
| light mineral oil | 5% | 5% | 5% |
| highly dispersed silicic acid | 5% | 5% | - |
| Kaolin | 65% | 40 % | - |
| Talcum | - | | 20 |

The active ingredient is thoroughly mixed with the adjuvants and the mixture is thoroughly ground in a suitable mill, affording powders that can be used directly for seed treatment.

| Emulsifiable concentrate | |
|---|---|
| active ingredient | 10 % |
| octylphenol polyethylene glycol ether | 3 % |
| (4-5 mol of ethylene oxide) | |
| calcium dodecylbenzenesultonate | 3% |
| castor oil polyglycol ether (35 mol of ethylene oxide) | 4 % |
| Cyclohexanone | 30 % |
| xylene mixture | 50 % |

Emulsions of any required dilution, which can be used in plant protection, can be obtained from this concentrate by dilution with water.

| Dusts | a) | b) | c) |
|---|---|---|---|
| Active ingredient | 5 % | 6% | 4 % |
| Talcum | 95% | - | - |
| Kaolin | - | 94% | - |
| mineral filler | - | - | 96% |

Ready-for-use dusts are obtained by mixing the active ingredient with the carrier and grinding the mixture in a suitable mill. Such powders can also be used for dry dressings for seed.

| Extruder granules | |
|---|---|
| Active ingredient | 15% |
| sodium lignosulfonate | 2 % |
| Carboxymethylcellulose | 1% |
| Kaolin | 82% |

The active ingredient is mixed and ground with the adjuvants, and the mixture is moistened with water. The mixture is extruded and then dried in a stream of air.

| Coated granules | |
|---|---|
| Active ingredient | 8% |
| polyethylene glycol (mol. wt. 200) | 3% |
| Kaolin | 89% |

The finely ground active ingredient is uniformly applied, in a mixer, to the kaolin moistened with polyethylene glycol. Non-dusty coated granules are obtained in this manner.

| Suspension concentrate | |
|---|---|
| active ingredient | 40 % |
| propylene glycol | 10% |
| nonylphenol polyethylene glycol ether (15 mol of ethylene oxide) | 6 % |
| Sodium lignosulfonate | 10 % |
| Carboxymethylcellulose | 1 % |
| silicone oil (in the form of a 75 % emulsion in water) | 1 % |
| Water | 32% |

The finely ground active ingredient is intimately mixed with the adjuvants, giving a suspension concentrate from which suspensions of any desired:dilution can be obtained by dilution with water. Using such dilutions, living plants as well as plant propagation material can be treated and protected against infestation by microorganisms, by spraying, pouring or immersion.

| Flowable concentrate for seed treatment | |
|---|---|
| active ingredient | 40 % |
| propylene glycol | 5 % |
| copolymer butanol PO/EO | 2 % |
| tristyrenephenole with 10-20 moles EO | 2 % |
| 1,2-benzisothiazolin-3-one (in the form of a 20% solution in water) | 0.5.% |
| monoazo-pigment calcium salt | 5% |
| Silicone oil (in the form of a 75 % emulsion in water) | 0.2 % |
| Water | 45.3% |

The finely ground active ingredient is intimately mixed with the adjuvants, giving a suspension concentrate from which suspensions of any desired dilution can be obtained by dilution with water. Using such dilutions, living plants as well as plant propagation material can be treated and protected against infestation by microorganisms, by spraying, pouring or immersion.

Using such formulations either straight or diluted plant propagation material can be treated and protected against damage, for example, from pests/and/or pathogen(s), by, for example, spraying, pouring or immersing.

In each aspect and embodiment of the invention, "consisting essentially" and inflections thereof are a preferred embodiment of "comprising" and its inflections, and "consisting of" and inflections thereof are a preferred embodiment of "consisting essentially of and its inflections.

The pesticides having a common name are described in the e-Pesticide Manual, version 3.0, 13th Edition, Ed. CDC Tomlin, British Crop Protection Council, 2003-04, along with their characteristics.

## Claims

1. A method of increasing functional protein activity in a plant comprising applying to the plant, part of the plant the plant propagation material thereof and/or a surrounding area thereof an effective amount of one or more neonicotinoid compounds.

2. The method of claim 1 wherein the functional protein is one or more selected from Glutathione-S-transferase (GST), glutathione peroxidase, glucosyl transferases, glucosyl esterases, and a cytochrome P450.

3. The method of claim 1 or claim 2 wherein the neonicotinoid compound is selected from acetamiprid, clothianidin, dinotefuran, imidacloprid, nitenpyram, thiacloprid and thiamethoxam.

4. The method of any one of claims 1 to 3 wherein the compound is thiamethoxam.

5. The method of any one of claims 1 to 4 wherein the plant is a crop plant.

6. The method of any one of claims 1 to 5 wherein the plant is selected from soya, corn, wheat, barley, rye, oats, corn, rice, sorghum, triticale, canola, oil seed rape, cotton, dry beans and sunflowers.

7. The method of claim 6 wherein the plant is a transgenic plant.

8. The method of any one of claims 1 to 7 wherein the amount of a functional protein in a plant is greater when an effective amount of a neonicotinoid compound is applied to the plant, part of the plant, the plant propagation material thereof and/or a surrounding area thereof compared to when the neonicotinoid compound is not applied.

9. The method of any one of claims 1 to 8 wherein the neonicotinoid compound is applied to a plant propagation material and/or a surrounding area thereof.

10. The method of claim 9 wherein the plant propagation material is a seed.

11. The method of any one of claims 1 to 10 wherein the plant is able to withstand stress conditions more effectively compared to when the neonicotinoid compound is not applied.

12. The method of any one of claims 1 to 12 wherein the plant is able to cope better under a stress selected from one or more of drought, low pH, high soil salinity, heat stress leading to protein degradation, toxic levels of aluminium, virus attack and wounding from various causes such as pests, wind, hail.

13. The use of an effective amount of one or more neonicotinoid compounds on a plant, part of a plant, a plant propagation material and/or a surrounding area thereof for increasing functional protein activity in the plant.
